# EUROPEAN PATENT SPECIFICATION

(11) **EP 3 279 388 B1**
(45) Date of publication and mention of the grant of the patent: **02.09.2020**
(21) Application number: 17183551.5
(22) Date of filing: 27.07.2017
(51) Int. Cl.: D06F 37/22, D06F 37/24, D06F 37/04, D06F 37/12

(54) **CLOTHES TREATING APPARATUS**
KLEIDUNGSBEHANDLUNGSVORRICHTUNG
APPAREIL DE TRAITEMENT DE VÊTEMENTS

(30) Priority: 04.08.2016 KR 20160099576
(43) Date of publication of application: 07.02.2018
(73) Proprietor: LG Electronics Inc., Yeongdeungpo-gu Seoul 07336 (KR)
(72) Inventor: KWAK, Byeongheon, Seoul 08592 (KR); KIM, Jinwoong, Seoul 08592 (KR); SEO, Hyunseok, Seoul 08592 (KR)
(74) Representative: Vossius & Partner Patentanwälte Rechtsanwälte mbB

(56) References cited:
- EP-A1- 2 578 738
- DE-A1-102009 021 327
- DE-A1-102013 221 293
- KR-A- 20140 002 585

## Description

### BACKGROUND OF THE INVENTION

### 1. Field of the Invention

The present invention relates to a clothes treating apparatus in which a ball balancer and a drum are coupled to each other in a hooking manner.

### 2. Background of the Invention

A clothes treating apparatus is an apparatus for removing contaminants from laundry by putting clothes, bedding, etc. (hereinafter, referred to as laundry) into the drum. The clothes treating apparatus may perform processes such as washing, rinsing, dewatering, and drying. Such clothes treating apparatuses are classified into a top loading type and a front loading type based on a method of loading laundry into a drum. A front loading type washing machine is generally called a drum type washing machine.

The clothes treating apparatus includes a cabinet forming an outer appearance, a tub accommodated in the cabinet, a drum rotatably mounted in the tub and having laundry introduced therein, a lifter located on an inner circumferential surface of the drum to help washing the laundry by lifting and dropping the laundry, and a detergent supply device for supplying detergent into the drum.

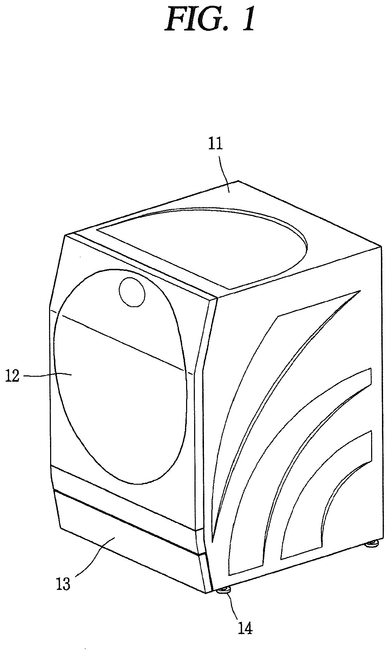

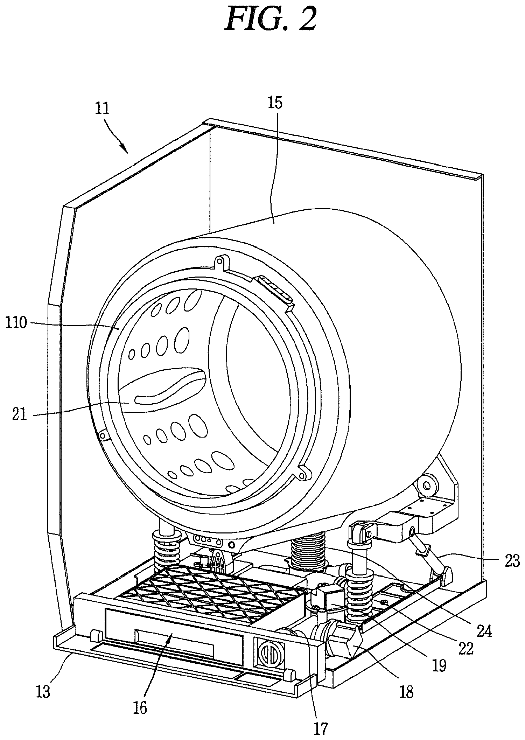

FIG. 1 illustrates a front-loading type clothes treating apparatus, and FIG. 2 illustrates an inner appearance of the clothes treating apparatus in FIG. 1.

The clothes treating apparatus includes a cabinet 11 forming an outer appearance, a drum 110 rotatably mounted in the cabinet 11 and having laundry introduced therein, a lifter 21 installed inside the drum 20, and a door 12 installed on a front surface of the cabinet 11. A detergent introduction opening cover 13 for covering a detergent introduction opening for introducing detergent is disposed on a lower portion of the cabinet 11. In addition, the clothes treating apparatus includes a duct, a heat exchanger, and the like because air needs to be circulated for drying the laundry placed in the drum 20. Further, a base for forming the bottom surface of the cabinet 11 is located on a lower portion of the clothes processing apparatus. The base serves to support the drum 110, the tub 15, a drain pump 18, a filter unit 17, and a detergent supply unit.

The laundry is accommodated in the drum, and the drum is rotated by the driving motor to perform the washing process. When the laundry is stored in the drum and a mass distribution of the laundry is within a permissible range based on a rotating shaft of the drum, a dynamic equilibrium (dynamic balance) may be maintained. However, the drum may be rotated without maintaining the dynamic balance depending on a position of the laundry stored in the drum.

When the mass distribution is not constant based on the rotating shaft of the drum during the rotation of the drum, the dynamic balance is broken. Accordingly, great vibration and noise may be generated due to the rotation of the drum, and problematically transferred to the tub or the cabinet.

In order to reduce the noise and vibration caused due to the rotation of the drum in a dynamic imbalance state, balancers are respectively disposed on front and rear sides of the drum. A material having a predetermined weight may be contained in each balancer. The material may be movable along a circumferential direction. When a load inside the drum is biased to one side, the material is distributed to an opposite side to a portion where the load is biased, thereby preventing an eccentric rotation of the drum. To this end, the balancers are installed on the front and rear sides of the drum.

The balancers should be fixedly coupled to the drum. However, in order to fix the balancers on the front and rear sides of the drum, holes for coupling the balances using screws are formed with predetermined intervals on an outer circumferential surface of the drum in a punching manner. Afterwards, balancers are fixedly coupled to the drum by inserting screws into screw coupling portions formed on outer circumferential surfaces of the balancers.

To this end, an operator of a production line forms the holes on the outer circumferential surface of the drum, and fixes the balancers to the drum by using screws as many as the number of the screw coupling portions. However, this method requires a time for coupling (or inserting) such separate screws, which increases a time required for the coupling task and lowers productivity.

Accordingly, there is a demand for a structure capable of allowing the operator to simply couple the drum and the balancers in a hooking manner while providing the same coupling force as the screw-coupling manner.

DE 10 2009 021327 A1 relates to a laundry machine, and discloses a structure in which a flange of a drum and a ball balancer are assembled together by hook couplings.

DE 10 2013 221293 A1 is directed to a laundry machine, and discloses a structure in which a ball balancer protruding from shells forming a drum is engaged with a drum by a hook and a hook accommodating portion.

### SUMMARY OF THE INVENTION

Therefore, an aspect of the present invention is to provide an apparatus capable of fixing a ball balancer and a drum in a simple manner and applying the same coupling force as screw coupling.

Another aspect of the present invention is to prevent a back-and-forth movement of a ball balancer due to a rotation of a drum, by way of fixing the drum and the ball balancer to each other.

Another aspect of the present invention is to provide operator convenience by fixing a drum and a ball balancer to each other in an inserting manner of pushing a cut surface of the drum into the ball balancer.

Another aspect of the present invention is to fast couple a drum and a ball balancer to each other by fixing the drum and the ball balancer to each other in a hook-coupling manner other than a screw-coupling manner.

To achieve these and other advantages and in accordance with the purpose of this specification, as embodied and broadly described herein, there is provided a clothes treating apparatus, comprising a drum having protruding circumferential surfaces in forward and backward directions parallel to the rotating shaft thereof, a plurality of hook portions formed by partially cutting the protruding circumferential surface thereof to be bent inwardly by an external force; and a front ball balancer disposed along a circumference of a front member of the drum and a rear ball balancer disposed along a circumference of a rear member of the drum, wherein the front ball balancer and the rear ball balancer formed in a ring shape and having hook accommodating portions protruding from the outer circumferential surface to accommodate the plurality of hook portions therein, wherein the plurality of hook portions are bent to be closely adhered on the hook accommodating portion, and restrict movements of the ball balancers in the forward and backward directions due to a rotation of the drum, wherein the hook accommodating portion comprises a first member protruding from an outer circumferential surface of the ball balancer and extending in a direction parallel to the rotating shaft of the drum, so as to prevent a separation of the hook portion; a second member protruding from the outer circumferential surface of the ball balancer and spaced by a preset distance from the first member to face each other; and a third member connected to the first member and the second member, and protruding from the outer circumferential surface of the ball balancer in an intersecting direction with an extending direction of the first and second members, so as to support the hook portion; wherein the third member is provided with a stopping portion formed in a shape of a slit inwardly formed along a central portion, so as to prevent a separation of the bent hook portion, wherein each of the hook portions is bent in a direction intersecting with a rotating shaft of the drum to be accommodated in the hook accommodating portion, wherein the free end of each hook portion is disposed in a forward or a backward direction parallel to the rotating shaft of the drum, and wherein the plurality of hook portions bent in the different directions are alternately arranged at preset intervals along the outer circumferential surface of the drum.

In accordance with one embodiment disclosed herein, the drum may be provided with a through hole formed through the outer circumferential surface at a position spaced apart from the hook portion, so that a screw is insertable therein, and the hook portion and the through hole may be alternately arranged along the outer circumferential surface of the drum at a preset interval.

In accordance with another embodiment disclosed herein, the hook portion may be formed by cutting the outer circumferential surface of the drum into a rectangular shape, and bent based on one edge.

In accordance with one embodiment disclosed herein, the hook portion may have a preset length to be accommodated in the hook accommodating portion and supported by being closely adhered on the ball balancer.

In accordance with one embodiment disclosed herein, the ball balancer may be provided with a screw coupling portion at a position corresponding to the through hole along the outer circumferential surface of the drum, such that a screw is insertable therein.

In accordance with one embodiment disclosed herein, the hook accommodating portion may have an inside in a tapered shape such that the hook portion bent by an external force is inserted therein and supported.

According to the present invention with the configuration, the drum and the ball balancer can be fixed to each other in a manner of simply pressing the hook portion formed on the outer circumferential surface of the drum into the hook accommodating portion.

By fixing the hook portion of the drum into the hook accommodating portion of the balancer, the same coupling force as that provided in a screw-coupling manner can be provided.

The hook portion of the drum can be provided in plurality located in different directions and inserted into the hook accommodating portions, respectively, thereby preventing a movement of the ball balancer in a forward or backward direction of the drum, irrespective of a rotation of the drum.

Also, the hook portion of the drum can be pushed into the hook accommodating portion of the ball balancer, which may allow an operator to quickly fix the drum and the ball balancer to each other. This coupling method can be performed by the operator faster than a coupling method merely using screws, thereby improving productivity.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a perspective view illustrating an outer appearance of a clothes treating apparatus;
FIG. 2 is a perspective view illustrating an inner structure of the clothes treating apparatus of FIG. 1;
FIG. 3 is a perspective view illustrating a state of a drum located within the clothes treating apparatus;
FIG. 4 is an exploded view of the drum of FIG. 3;
FIG. 5 is a sectional view of a drum and ball balancers located on front and rear sides of the drum;
FIG. 6 is a front view of the drum to show a position where hook coupling or screw coupling is made;
FIG. 7 is a perspective view illustrating a hook accommodating portion of the ball balancer;
FIG. 8A is a sectional view illustrating that a hook portion is bent from a front portion of the drum and then inserted into the hook accommodating portion;
FIG. 8B is a sectional view illustrating that the hook portion located at a different position from that illustrated in FIG. 8A is bent from the front portion of the drum, and then inserted into the hook accommodating portion;
FIG. 9A is a sectional view illustrating that the hook portion is bent from the rear portion of the drum and then inserted into the hook accommodating portion;
FIG. 9B is a sectional view illustrating that the hook portion located at a different position from that illustrated in FIG. 9A is bent from the rear portion of the drum, and then inserted into the hook accommodating portion;
FIG. 10 is a view illustrating a state that a hook portion cut into a rectangular shape is inserted into the hook accommodating portion;
FIG. 11 is a perspective view illustrating a screw coupling portion formed on the ball balancer;
FIG. 12 is a sectional view illustrating that a front ball balancer and a front member of the drum are coupled in a screw coupling manner; and
FIG. 13 is a sectional view illustrating that a rear ball balancer and a rear member of the drum are coupled in a screw coupling manner.

### DETAILED DESCRIPTION OF THE INVENTION

Description will now be given in detail of a clothes treating apparatus according to exemplary embodiments disclosed herein, with reference to the accompanying drawings. For the sake of brief description with reference to the drawings, the same or equivalent components may be provided with the same or similar reference numbers, and description thereof will not be repeated. A singular representation may include a plural representation unless it represents a definitely different meaning from the context.

FIG. 1 is a perspective view illustrating an outer appearance of a clothes treating apparatus, and FIG. 2 is a perspective view illustrating an inner structure of the clothes treating apparatus of FIG. 1.

A clothes treating apparatus 100 includes a cabinet 11 forming an outer appearance, a drum 110 rotatably installed within the cabinet 11 and having laundry (clothes) introduced therein, a lifter 21 installed within the drum 110, and a door 12 installed on a front surface of the cabinet 11. Also, a detergent introduction opening cover 13 for covering a detergent introduction opening, through which detergent is introduced, is located on a lower portion of the cabinet 11. Also, the clothes treating apparatus 100 may further include a duct (not illustrated), a heat exchanger (not illustrated) and the like, by which air circulates to dry the laundry stored in the drum 110.

The clothes treating apparatus 100 may be provided in a lower portion thereof with a storage container 16 accommodating liquid detergent or liquid softener therein and drawn out of the cabinet 11, a plurality of elastic members 22 and/or dampers 23 for supporting the drum 110 and suppressing vibration, and a driving motor (not illustrated) for rotating the drum 110. The door 12 may be provided on the front surface of the cabinet 11 so that laundry to be washed can be taken in and out. The door 12 may be configured to open and close the front surface of the drum 110. The door 12 may have a disk shape. An electric heater for heating water when power is applied thereto may be provided below the drum 110.

A drain pump 18 for draining water inside the drum 110 may be provided below the drum 110. A circulation pump 19 for pumping up water within the drum 110 to be introduced into an upper region of the drum 110 may be provided below the drum 110. A filter unit 17 for collecting (filtering) foreign materials from the water drawn out of the drum 110 may be provided at one side of the drain pump 18.

A base is located at a lower portion of the clothes treating apparatus 100. The base may be provided thereon with the filter unit 17, the drain pump 18, the circulation pump 19, the elastic members 22 for supporting the drum 110, and the like, and forms a bottom surface of the clothes treating apparatus 100.

The base is provided with a plurality of legs 14 functioning to space the clothes treating apparatus 100 apart from the ground by a predetermined height. The legs 14 serve to support the clothes treating apparatus 100.

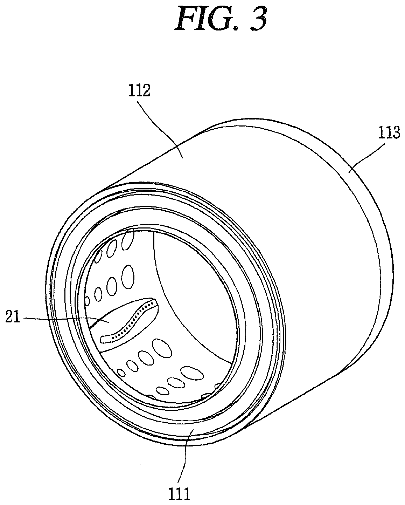

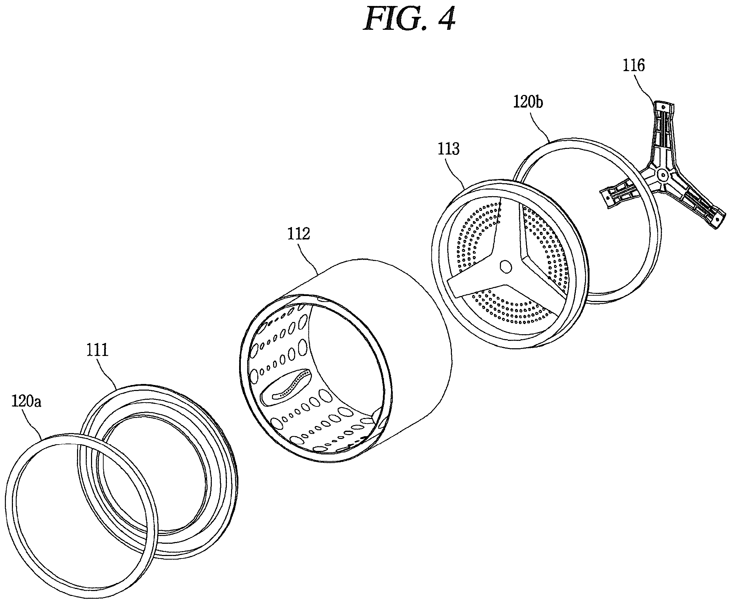

FIG. 3 is a perspective view illustrating the drum 110 rotating within a tub 15 with accommodating laundry therein. FIG. 4 is an exploded view of the drum 110 of FIG. 3.

The drum 110 is formed by coupling a front member 111 (or a drum front), a cylindrical member 112 (or a drum center), and a rear member 113 (or a drum rear). The drum 110 may receive laundry therein, and be rotated by the driving motor within the tub to perform a washing process.

The outer appearance of the drum 110 is defined as the front member 111, the cylindrical member 112, and the rear member 113 are coupled together.

A front ball balancer 120a and a rear ball balancer 120b are located at front and rear sides of the cylindrical member 112, respectively. A spider 116 is located at a rear surface of the rear member 113.

As to the role of each member, the ball balancer 120 is a member for suppressing vibration as the drum 110 rotates, and is provided therein with balls or liquid (fluid). The spider 116 is a member that serves to apply a rotational force of the drum 110. The lifter lifts the laundry within the drum 110 and then drops the laundry, thereby improving washing performance by a fall of the laundry.

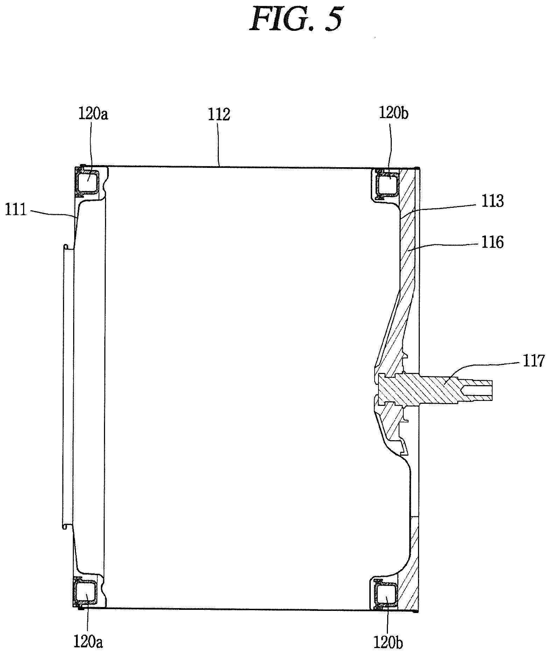

FIG. 5 is a sectional view illustrating the drum 110 and a ball balancer 120 located on front and rear sides of the drum 110.

As illustrated in FIG. 5, the drum 110 includes a cylindrical member 112 formed in a cylindrical shape, a front member 111 disposed on a front side of the cylindrical member 112, a rear member 113 disposed on a rear side of the cylindrical member 112.

The front member 111 is formed in a manner that a circumferential surface thereof partially overlaps a part of a front circumferential surface of the cylindrical member 112 at the front of the cylindrical member 112 and then is curled together with the part of the cylindrical member 112 to be fixed to the cylindrical member 112. The front member 111 is provided with an opening through which the laundry is taken in and out.

The front member 111 forwardly protrudes to form a stepped portion. The front balancer is mounted on the stepped portion. As illustrated in FIG. 5, the front ball balancer 120a is formed in a ring shape with a rectangular cross section and disposed along a circumference of the front member 110.

Hook accommodating portion 121 and screw-coupling portions 122 are alternately formed at predetermined intervals along an outer circumferential surface of the front ball balancer 120a. Accordingly, the overlapped portions of the front member 111 and the cylindrical member 112 are coupled in a hook-coupling manner by hook portions 114 each of which is formed in a cutting manner, and in a screw-coupling manner by screws inserted into through holes 115 formed through an outer circumferential surface of the drum 110. As a result, the front ball balancer 120a and the drum 110 can be fixed to each other. This will be descried in detail later.

The rear member 113, similar to the front member 111, is formed in a manner that a circumferential surface thereof partially overlaps a part of a front circumferential surface of the cylindrical member 112 at the rear of the cylindrical member 112 and then is curled together with the part of the cylindrical member 112 to be fixed to the cylindrical member 112. The rear member 113 which serves to cover the rear of the cylindrical member 112 is disposed at the rear of the cylindrical member 112. The spider 116 coupled to a rotating shaft is coupled to a rear surface of the rear member 113 and transfers rotational force by the driving motor to the drum 110 through the rotating shaft.

The rear member 113 backwardly protrudes to form a stepped portion. The rear balancer is mounted on the stepped portion. Similar to the front ball balancer 120a, the rear ball balancer 120b is formed in a ring shape with a rectangular cross section and disposed along a circumference of the rear member 113.

As aforementioned, the hook accommodating portions 121 and the screw-coupling portions 122 are alternately formed at predetermined intervals along the outer circumferential surface of the rear ball balancer 120b. Accordingly, the overlapped portions of the rear member 113 and the cylindrical member 112 may be coupled in a hook-coupling manner by the hook portions 114 which are formed in the cutting manner and coupled in a screw-coupling manner through the through holes 115 formed through the outer circumferential surface of the drum 110. As a result, the rear ball balancer 120b and the drum 110 are fixed to each other.

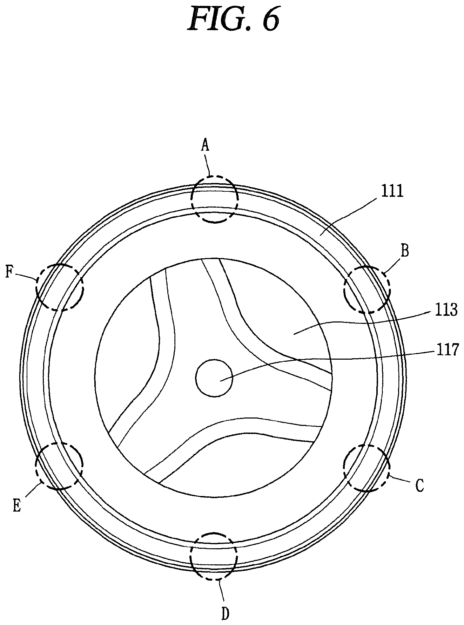

FIG. 6 is a front view of the drum 110 viewed from the front.

A to F indicated in FIG. 6 denote coupled positions between the drum 110 and the ball balancer 120 and are located at 60-degree intervals with respect to the circular drum 110. However, this is merely illustrative, and more coupled portions may be formed to increase coupling force between the drum 110 and the ball balancer 120.

The clothes treating apparatus 100 according to the present invention is characterized in that the coupling of the drum 110 and the ball balancer 120 is made alternately by screw coupling and hook coupling. For example, the screw coupling may be made at the positions A and D and the hook coupling may be made at the positions B, C, E and F. Since the hook coupling is performed by an operator more easily than the screw coupling, the hook coupling may preferably be made at at least one of the positions A to F.

The present invention may implement various embodiments with a configuration allowing screw coupling or/and hook coupling. However, since unexpected stress may be generated due to centrifugal force or vibration generated by the rotation of the drum 110, each hook coupling may be performed at symmetrical positions with respect to a center of the drum 110, and each screw coupling may also be performed at symmetrical positions with respect to the center of the drum 110.

For coupling the drum 110 and the ball balancer 120 in the hook-coupling manner, a part of the outer circumferential surface of the drum 110 may be cut and the cut part of the drum 110 may be bent toward an inside of the drum 110, thereby forming a hook portion 114. The hook portion is accommodated in the hook accommodating portion 121 formed on the outer circumferential surface of the ball balancer 120 so that the drum 110 and the ball balancer 120 can be fixed to each other.

For coupling the drum 110 and the ball balancer 120 in the screw-coupling manner, a through hole 115 may be formed through the outer circumferential surface of the drum 110, and a screw coupling portion 122 may be formed on the outer circumferential surface of the ball balancer 120. Accordingly, a screw is inserted through the through hole of the drum 110 to be coupled into the screw coupling portion 122 of the ball balancer, thereby fixing the drum 110 and the ball balancer 120 to each other.

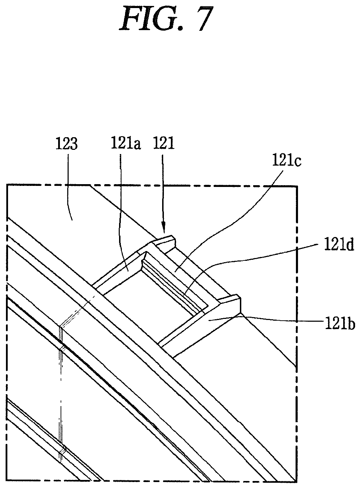

FIG. 7 is a perspective view illustrating the hook accommodating portion 121 of the ball balancer 120.

The ball balancer 120 is provided with the hook accommodating portion 121 protruding along the outer circumferential surface of the ball balancer 120. The hook accommodating portion 121 may be provided by at least one in number on the outer circumferential surface of the ball balancer 120. Here, the ball balancer 120 refers to a front ball balancer 120a or a rear ball balancer 120b.

The hook accommodating portion 121 accommodates therein the hook portion 114, which is formed by cutting the portion of the outer circumferential surface of the drum 110 and bending the cut portion into the drum 110. As the hook portion 114 is accommodated in the hook accommodating portion 121, the drum 110 and the ball balancer 120 can be fixed to each other. The hook portion 114 may be supported by the hook accommodating portion 121 so that the drum 110 and the ball balancer 120 can be closely adhered to each other and a back-and-forth movement of the ball balancer 120 due to the rotation of the drum can be restricted. Further, an inside of the hook accommodating portion 121 may have a tapered shape so that the hook portion 114 bent by an external force can be inserted into the hook accommodating portion 121 and supported.

The hook accommodating portion 121 includes a first member 121a, a second member 121b, a third member 121c, and a stopping portion 121d.

The first member 121a and the second member 121b are spaced apart from each other by a predetermined distance.

The first member 121a and the second member 121b protrude from the outer circumferential surface of the ball balancer 120 and extend in a direction parallel to the rotating shaft of the drum 110.

The spaced distance between the first member 121a and the second member 121b is decided by a cut width of the outer circumferential surface of the drum 110. The first member 121a and the second member 121b may have a shape with a bent portion, in which a height thereof protruding from the outer circumferential surface of the ball balancer 120 gradually increases up to a portion where the first member 121a and the second member 121b are brought into contact with the third member 121c connecting the first member 121a and the second member 121b.

The third member 121c connects the first member 121a and the second member 121b to each other and has a shape protruding from the outer circumferential surface of the ball balancer 120. In detail, the third member 121c may protrude from the outer circumferential surface of the ball balancer 120 in a direction intersecting with the extending direction of the first member 121a and the second member 121b.

The third member 121c is provided with a stopping portion 121d on which the hook portion 114 formed by cutting the outer circumferential surface of the drum 110 is locked (hooked, stopped). The stopping portion 121d is implemented as a protrusion formed by a slit, which extends in one direction on a central portion of the third member 121c.

The stopping portion 121d may accommodate therein the hook portion 114 so as to prevent a separation of the bent hook portion 121d, thereby preventing the back-and-forth movement of the ball balancer 120 due to the rotation of the drum 110.

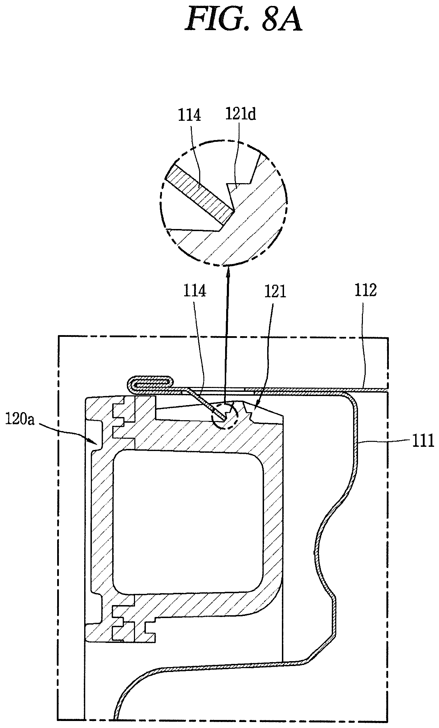

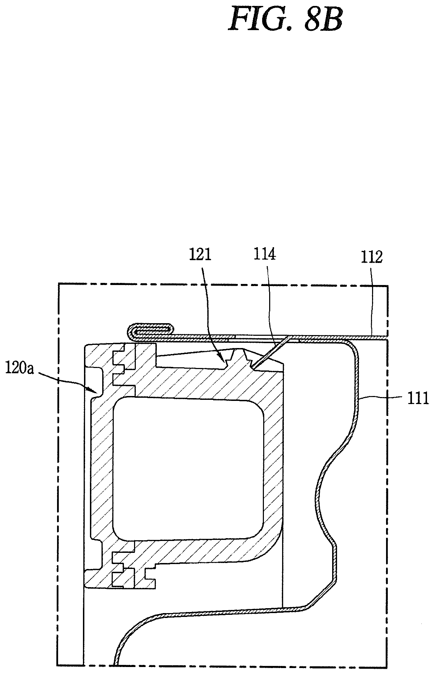

FIGS. 8A and 8B are views illustrating a state in which the hook portion 114 is accommodated in the hook accommodating portion 121 at a front portion of the drum.

FIGS. 8A and 8B illustrate coupling between the drum 110, which is formed by the cylindrical member 112 and the front member 111, and the front ball balancer 120a.

The hook portion 114 is formed by cutting the outer circumferential surface of the drum 110 into a predetermined shape to be bent into the drum by an external force. The drum 110 may be made of a metal. As illustrated in FIG. 8A, when the outer circumferential surface of the drum 110 is cut, the cut surface is bendable into the drum 110 due to the nature of the metal itself so as to function as the hook portion 114. Here, the outer circumferential surface of the drum 110 refers to the outer circumferential surface of the front member 111 and/or the cylindrical member 112.

As illustrated in FIG. 8A, the hook portion 114 may be formed by cutting a portion where the front member 111 and the cylindrical member 112 overlap each other. The hook portion 114 may be formed by the outer circumferential surface of the front member 111 or the outer circumferential surface of the cylindrical member 112. FIGS. 8A and 8B illustrate an example in which the hook portion 114 formed by cutting the outer circumferential surface of the cylindrical member 112.

As illustrated in FIGS. 8A and 8B, the hook portion 114 is bent by an external force applied by an operator, and locked by the stopping portion 121d of the hook accommodating portion 121, so as to restrict the movement of the ball balancer in a forward or backward direction of the drum. Accordingly, the hook portion 114 should have a preset length. In detail, the hook portion 114 may preferably be cut to have a length enough to be locked by the stopping portion of the hook accommodating portion 121.

FIG. 8B illustrates that the hook portion 114 is formed by cutting the outer circumferential surface of the drum 110 and then accommodated in the hook accommodating portion 121 by being bent by an external force. The hook portion 114 may be formed to be bent in a direction different from that of the hook portion 114 of FIG. 8A so as to be accommodated in the hook accommodating portion 121. That is, as illustrated in FIG. 8B, a position of the outer circumferential surface of the drum 110, different from the cut position of FIG. 8A, is cut to form the hook portion 114. Accordingly, the hook portion 114 of FIG. 8B may be located at the different position from the position of the hook portion 114 of FIG. 8A. It may be noticed that the hook portion 114 of FIG. 8B and the hook portion 114 of FIG. 8A are formed at positions facing each other based on the ball balancer 120.

The hook portion 114 may be provided by at least one in number, which is formed at a predetermined interval along the outer circumference of the drum 110. The hook portions 114 are bent alternately in different directions to be supported by the stopping portions 121d of the hook accommodating portions 121, respectively. In this case, the drum 110 and the ball balancer 120 can be effectively fixed as compared with the case where the hook portions 114 are bent in the same direction.

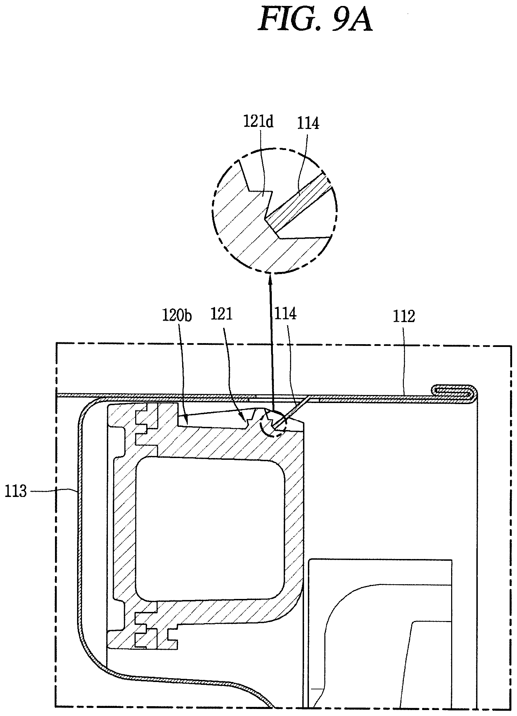

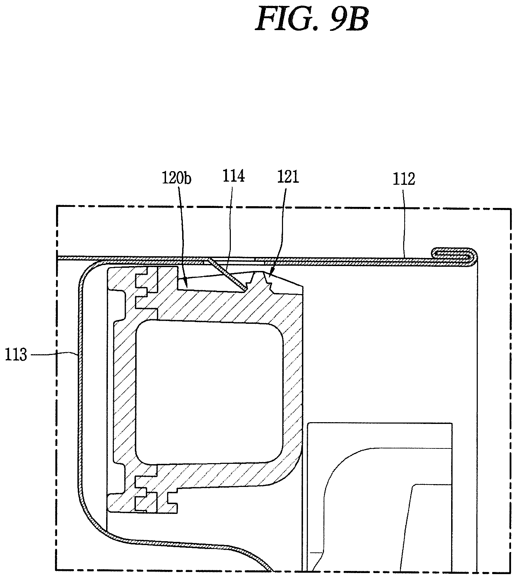

FIGS. 9A and 9B are views illustrating a state in which the hook portion 114 is accommodated in the hook accommodating portion 121 at a rear portion of the drum.

FIGS. 9A and 9B illustrate that the hook portion 114 is accommodated in the hook accommodating portion 121 at the rear portion of the drum. Also, the structures illustrated in FIGS. 8A and 8B may equally be applied even to the coupling between the drum 110, which is formed by the cylindrical member 112 and the rear member 113, and the rear ball balancer 120b.

As illustrated in FIGS. 9A and 9B, the hook portion 114 is formed by cutting the outer circumferential surface of the drum 110 into a predetermined shape and then bent into the drum 110 by an external force.

Since the drum 110 is made of a metal, as illustrated in FIG. 9A, when the outer circumferential surface of the drum 110 is cut, the cut portion may be bendable into the drum 110 due to the nature of the metal itself, so as to function as the hook portion 114. Here, the outer circumferential surface of the drum 110 refers to the outer surface of the rear member 113 and the cylindrical member 112.

As illustrated in FIG. 9A, the hook portion 114 may be formed by cutting a portion where the rear member 113 and the cylindrical member 112 overlap each other. The hook portion 114 may be formed by the outer circumferential surface of the rear member 113 or the outer circumferential surface of the cylindrical member 112. FIGS. 9A and 9B illustrate an example in which the outer circumferential surface of the cylindrical member 112 is cut to form the hook portion 114.

As illustrated in FIGS. 9A and 9B, the hook portion 114 is bent by an external force applied by an operator, and locked by the stopping portion 121d of the hook accommodating portion 121, so as to restrict the movement of the ball balancer in the forward or backward direction of the drum. Accordingly, the hook portion 114 should have a preset length. In detail, the hook portion 114 may preferably be cut to have a length enough to be locked by the stopping portion of the hook accommodating portion 121.

In FIG. 9B, similar to FIG. 9A, the hook portion 114 is formed by cutting the outer circumferential surface of the drum 110 and bent by an external force to be accommodated in the hook accommodating portion 121. The hook portion 114 may be accommodated in the hook accommodating portion 121 by being bent in a direction different from that of the hook portion 114 of FIG. 9A.

That is, as illustrated in FIG. 9B, a position of the outer circumferential surface of the drum 110, which is different from the cut position of FIG. 9A, is cut to form the hook portion 114. Accordingly, the hook portion 114 of FIG. 9B may be located at the different position from the position of the hook portion 114 of FIG. 9A. It can be noticed that the hook portion 114 of FIG. 9B and the hook portion 114 of FIG. 9A are formed at positions facing each other based on the ball balancer 120.

The hook portions 114 are formed at predetermined intervals along the outer circumference of the drum 110. The hook portions 114 are bent alternately in different directions to be supported by the stopping portions 121d of the hook receiving portions 121, respectively. In this case, the drum 110 and the ball balancer 120 can be effectively fixed as compared with the case where the hook portions 114 are bent in the same direction.

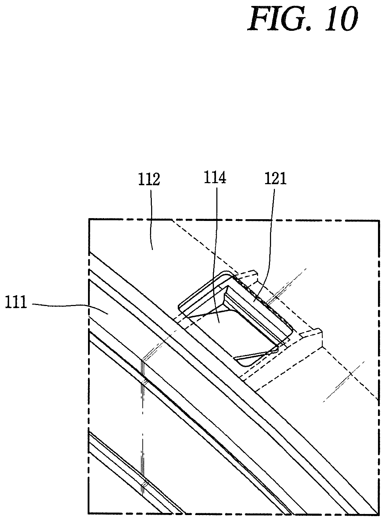

FIG. 10 illustrates a state in which the hook portion 114 cut into a rectangular shape is accommodated in the hook accommodating portion 121.

As illustrated in FIGS. 8A to 9B, the hook portion 114 may be accommodated in the hook accommodating portion 121 by being bent into the drum by an external force.

The hook portion 114 may be formed by cutting the outer circumferential surface of the drum 110 into a rectangular shape. At this time, each corner may be rounded. It may be preferable that a width of the hook portion 114 corresponds to a width of the hook accommodating portion 121. The width of the hook portion 114 may be decided by a length of the third member 121c of the hook accommodating portion 121 and the separation of the hook portion 114 may be prevented by the first member 121a and the second member 121b located at both ends of the third member 121c.

The hook portion 114, which is cut into the rectangular shape except for one edge, may be bent in a direction intersecting with the rotating shaft of the drum 110 centering on the uncut edge. The bent hook portion 114 is supported by the stopping portion 121d of the hook accommodating portion 121, thereby fixing the drum and the ball balancer 120 to each other.

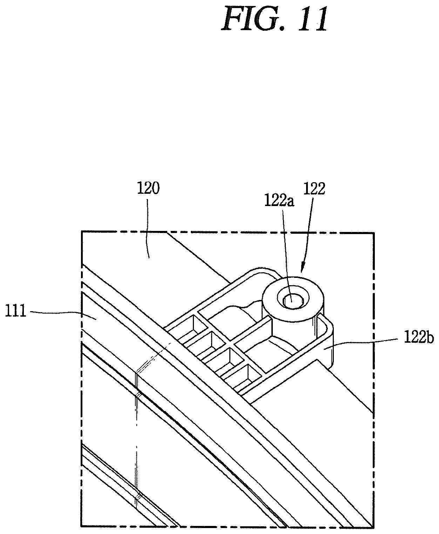

FIG. 11 illustrates a state of a screw coupling portion 122 formed on the ball balancer 120.

The screw coupling portions 122 may be formed at predetermined intervals along the outer circumferential surface of the ball balancer 120. The hook accommodating portions 121 or the screw coupling portions 122 are alternately arranged on the outer circumferential surface of the ball balancer 120 at predetermined intervals. The hook accommodating portion 121 for accommodating the hook portion 114, which is formed by cutting the outer circumferential surface of the drum 110, and the screw coupling portion 122, to which a screw is coupled, are formed on the outer circumferential surface of the ball balancer 120 at predetermined intervals.

The screw coupling portions 122 are formed through the outer circumferential surface of the drum 100 so as to correspond to the through holes 115 through which the screws are inserted, respectively. Each of the screw coupling portions 122 is provided with a screw coupling hole 122a.

The screw coupling hole 122 is typically formed in a cylindrical shape in which a screw is fixedly inserted. Rib 122b protrude from the outer circumferential surface of the ball balancer 120 and are connected to the screw coupling hole 122a. The ribs 122b are connected to both sides of the screw coupling hole 122a and cover the drum 110 so as to be brought into contact with an inner circumferential surface of the drum 110. The rib 122b serves to support the inner circumferential surface of the drum 110. Each rib 122b may extend along one direction and extend in an intersecting direction with the one direction. Thus, a space (not illustrated) may be formed between the ribs 122b.

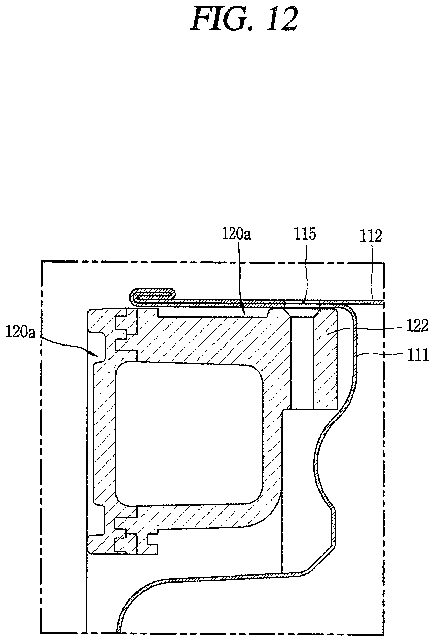

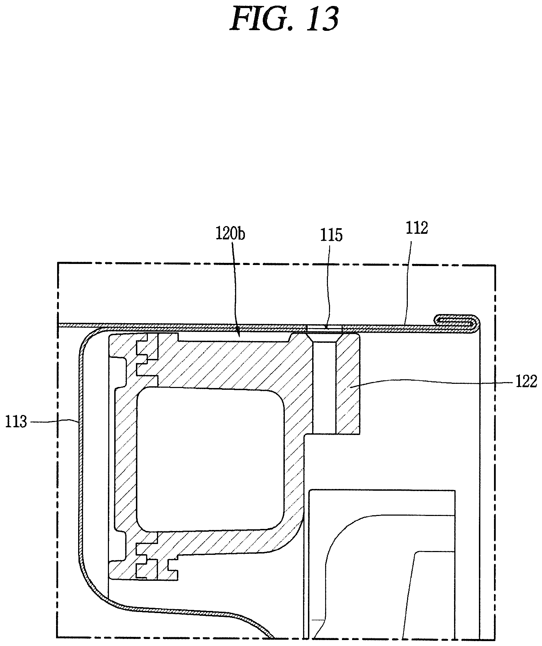

FIG. 12 illustrates a state in which the front ball balancer 120a and the front member 111 of the drum 110 are coupled to each other by a screw, and FIG. 13 illustrates a state in which the rear ball balancer 120b and the rear member 113 of the drum 110 are coupled to each other by a screw.

The front ball balancer 120a and the rear ball balancer 120b are located in spaces which are formed as the front and rear members 111 and 113 of the drum 110 protrude, respectively.

The through hole 115 formed through the outer circumferential surface of the drum 110 may be provided in plurality in a manner of being spaced apart from one another along the circumference. The screw coupling portion 122 formed on the outer circumferential surfaces of the front ball balancer 120a and the rear ball balancer 120b may be provided in plurality in a manner of being spaced apart from one another along the circumference.

At this time, the screw coupling portions 122 formed on the outer circumferential surfaces of the front ball balancer 120a and the rear ball balancer 120b and the through hole 115 formed on the outer circumferential surface of the drum 110 are located to overlap each other. The drum 110 and the ball balancer 120 are fixedly coupled to each other by coupling a screw into the screw coupling hole 122a. Accordingly, the movement of the ball balancer 120 in the back-and-forth direction due to the rotation of the drum 110 during a washing process can be prevented.

The structure of fixing the ball balancer 120 and the drum 110 to each other through the screw coupling requires a more extended task time than the structure of forming the hook portion 114 on the outer circumferential surface of the drum 110 to be accommodated in the hook accommodating portion 121 of the ball balancer 120. Therefore, by appropriately arranging the coupled portion using the screw and the coupled portion using the hook, as in the present invention, an operation time can be effectively reduced even while providing the same coupling force, as compared with the method of fixing the drum 110 and the ball balancer 120 by using the screw.

The clothes processing apparatus described above is not limited to the configurations and the methods of the embodiments described above, but the embodiments may be configured by selectively combining all or some of the embodiments so that various modifications can be made.

## Claims

1. A clothes treating apparatus (100), comprising:
a drum (110) having protruding circumferential surfaces in forward and backward directions parallel to the rotating shaft thereof, a plurality of hook portions (114) formed by partially cutting the protruding circumferential surface thereof to be bent inwardly by an external force; and
a front ball balancer (120a) disposed along a circumference of a front member (111) of the drum (110) and a rear ball balancer (120b) disposed along a circumference of a rear member of the drum (110), wherein the front ball balancer (120a) and the rear ball balancer (120b) are formed in a ring shape and having hook accommodating portions (121) protruding from the outer circumferential surface to accommodate the plurality of hook portions (114) therein,
wherein the plurality of hook portions (114) are bent to be closely adhered on the hook accommodating portion (121), and restrict movements of the ball balancers (120a, 120b) in the forward and backward directions due to a rotation of the drum (110),
wherein the hook accommodating portion (121) comprises:
a first member (121a) protruding from an outer circumferential surface of the ball balancer (120) and extending in a direction parallel to the rotating shaft of the drum (110), so as to prevent a separation of the hook portion (114);
a second member (121b) protruding from the outer circumferential surface of the ball balancer (120) and spaced by a preset distance from the first member (121a) to face each other; and
a third member (121c) connected to the first member (121a) and the second member (121b), and protruding from the outer circumferential surface of the ball balancer (120) in an intersecting direction with an extending direction of the first and second members (121a, 121b), so as to support the hook portion (114); **characterized in that**
the third member (121c) is provided with a stopping portion (121d) formed in a shape of a slit inwardly formed along a central portion, so as to prevent a separation of the bent hook portion (114), wherein each of the hook portions (114) is bent in a direction intersecting with the rotating shaft of the drum (110) to be accommodated in the hook accommodating portion (121), wherein the free end of each of the hook portions (114) is disposed in a forward or backward direction parallel to the rotating shaft of the drum (110), and wherein the plurality of hook portions (114) bent in the different directions are alternately arranged at preset intervals along the outer circumferential surface of the drum (110).

2. The apparatus of claim 1, wherein the drum (110) is provided with a through hole (115) formed through the outer circumferential surface at a position spaced apart from the hook portion (114), so that a screw is insertable therein, and
wherein the hook portion (114) and the through hole (115) are alternately arranged along the outer circumferential surface of the drum (110) at a preset interval.

3. The apparatus of claim 1 or 2, wherein the hook portion (114) is formed by cutting the outer circumferential surface of the drum (110) into a rectangular shape, and bent based on one edge.

4. The apparatus of any one of claims 1 to 3, wherein the hook portion (114) has a preset length to be accommodated in the hook accommodating portion (121) and supported by being closely adhered on the ball balancers (120a, 120b).

5. The apparatus of any one of claims 2 to 4, wherein the ball balancers (120a, 120b) are provided with a screw coupling portion (122) at a position corresponding to the through hole (115) along the outer circumferential surface of the drum (110), such that a screw is insertable therein.

6. The apparatus of any one of claims 1 to 5, wherein the hook accommodating portion (121) has an inside in a tapered shape such that the hook portion (114) bent by an external force is inserted therein and supported.

## Patentansprüche

1. Wäschebehandlungsvorrichtung (100), die aufweist:
eine Trommel (110), die vorstehende Umfangsflächen in Vorwärts- und Rückwärtsrichtung parallel zu ihrer Drehwelle aufweist, wobei mehrere Hakenabschnitte (114) dadurch gebildet werden, das die vorstehende Umfangsfläche teilweise geschnitten wird, um durch eine äußere Kraft nach innen gebogen zu werden; und
einen vorderen Kugelausgleicher (120a), der entlang eines Umfangs eines vorderen Elements (111) der Trommel (110) vorgesehen ist, und einen hinteren Kugelausgleicher (120b), der entlang eines Umfangs eines hinteren Elements der Trommel (110) vorgesehen ist, wobei der vordere Kugelausgleicher (120a) und der hintere Kugelausgleicher (120b) ringförmig gebildet sind und Hakenaufnahmeabschnitte (121) aufweisen, die von der Außenumfangsfläche vorstehen, um die mehreren Hakenabschnitte (114) darin aufzunehmen,
wobei die mehreren Hakenabschnitte (114) gebogen sind, so dass sie nahe am Hakenaufnahmeabschnitt (121) anliegen, und Bewegungen der Kugelausgleicher (120a, 120b) in Vorwärts- und Rückwärtsrichtung aufgrund einer Drehung der Trommel (110) beschränken,
wobei der Hakenaufnahmeabschnitt (121) aufweist:
ein erstes Element (121a), das von einer Außenumfangsfläche des Kugelausgleichers (120) vorsteht und sich in eine Richtung parallel zur Drehwelle der Trommel (110) erstreckt, um ein Lösen des Hakenabschnitts (114) zu verhindern;
ein zweites Element (121b), das von der Außenumfangsfläche des Kugelausgleichers (120) vorsteht und um einen vorbestimmten Abstand vom ersten Element (121a) beabstandet ist, so dass sie einander zugewandt sind; und
ein drittes Element (121c), das mit dem ersten Element (121a) und dem zweiten Element (121b) verbunden ist und von der Außenumfangsfläche des Kugelausgleichers (120) in eine Richtung vorsteht, die sich mit einer Ausdehnungsrichtung des ersten und des zweiten Elements (121a, 121b) schneidet, um den Hakenabschnitt (114) zu stützen;
**dadurch gekennzeichnet, dass**
das dritte Element (121c) einen Stoppabschnitt (121d) aufweist, der die Form eines Schlitzes hat, der entlang eines zentralen Abschnitts einwärts gebildet ist, um ein Lösen des gebogenen Hakenabschnitts (114) zu verhindern, wobei jeder der Hakenabschnitte (114) in eine Richtung gebogen ist, die sich mit der Drehwelle der Trommel (110) schneidet, um im Hakenaufnahmeabschnitt (121) aufgenommen zu werden, wobei das freie Ende jedes der Hakenabschnitte (114) in einer Vorwärts- oder Rückwärtsrichtung parallel zur Drehwelle der Trommel (110) angeordnet ist, und wobei die mehreren in die verschiedenen Richtungen gebogenen Hakenabschnitte (114) abwechselnd in vorgegebenen Abständen entlang der Außenumfangsfläche der Trommel (110) angeordnet sind.

2. Vorrichtung nach Anspruch 1, wobei die Trommel (110) ein Durchgangsloch (115) aufweist, das an einer Position beabstandet vom Hakenabschnitt (114) durch die Außenumfangsfläche gebildet ist, so dass eine Schraube in dieses eingesetzt werden kann, und
wobei der Hakenabschnitt (114) und das Durchgangsloch (115) abwechselnd entlang der Außenumfangsfläche der Trommel (110) in einem vorgegebenen Abstand angeordnet sind.

3. Vorrichtung nach Anspruch 1 oder 2, wobei der Hakenabschnitt (114) dadurch gebildet wird, dass die Außenumfangsfläche der Trommel (110) in eine rechteckige Form geschnitten und basierend auf einer Kante gebogen wird.

4. Vorrichtung nach einem der Ansprüche 1 bis 3, wobei der Hakenabschnitt (114) eine vorgegebene Länge hat, um im Hakenaufnahmeabschnitt (121) aufgenommen und durch enges Anliegen an die Kugelausgleicher (120a, 120b) gestützt zu werden.

5. Vorrichtung nach einem der Ansprüche 2 bis 4, wobei die Kugelausgleicher (120a, 120b) an einer Position, die dem Durchgangsloch (115) entlang der Außenumgangsfläche der Trommel (110) entspricht, mit einem Schraubenverbindungsabschnitt (122) versehen sind, so dass eine Schraube in diesen eingesetzt werden kann.

6. Vorrichtung nach einem der Ansprüche 1 bis 5, wobei der Hakenaufnahmeabschnitt (121) im Inneren kegelförmig ist, so dass der durch eine Kraft von außen gebogene Hakenabschnitt (114) darin eingesetzt und gestützt wird.

## Revendications

1. Machine à traiter le linge (100), comprenant :
un tambour (110) présentant des surfaces circonférentielles en saillie vers l'avant et vers l'arrière parallèlement à son arbre rotatif, une pluralité de parties formant crochet (114) formées par découpe partielle de leur surface circonférentielle en saillie de manière à plier celle-ci vers l'intérieur par application d'une force externe ; et
un dispositif d'équilibrage frontal à billes (120a) disposé sur la circonférence d'un élément avant (111) du tambour (110) et un dispositif d'équilibrage arrière à billes (120b) disposé sur la circonférence d'un élément arrière du tambour (110), où le dispositif d'équilibrage frontal à billes (120a) et le dispositif d'équilibrage arrière à billes (120b) sont de forme annulaire et présentent des parties de réception de crochet (121) en saillie sur la surface circonférentielle extérieure pour recevoir la pluralité de parties formant crochet (114),
où la pluralité de parties formant crochet (114) sont pliées de manière à être étroitement serrées contre la partie de réception de crochet (121), et limiter le mouvement vers l'avant et vers l'arrière des dispositifs d'équilibrage (120a, 120b) du fait de la rotation du tambour (110),
où la partie de réception de crochet (121) comprend :
un premier élément (121a) en saillie sur une surface circonférentielle extérieure du dispositif d'équilibrage (120) et s'étendant parallèlement à l'arbre rotatif du tambour (110), de manière à empêcher une séparation de la partie formant crochet (114) ;
un deuxième élément (121b) en saillie sur une surface circonférentielle extérieure du dispositif d'équilibrage (120) et espacé d'une distance définie du premier élément (121a) de manière à lui faire face ; et
un troisième élément (121c) raccordé au premier élément (121a) et au deuxième élément (121b), et en saillie sur la surface circonférentielle extérieure du dispositif d'équilibrage (120) dans une direction croisant la direction d'extension du premier et du deuxième éléments (121a, 121b), de manière à supporter la partie formant crochet (114) ; **caractérisée en ce que**
le troisième élément (121c) est pourvu d'une partie de butée (121d) ayant la forme d'une fente ménagée vers l'intérieur le long d'une partie centrale, de manière à empêcher une séparation de la partie pliée formant crochet (114), chacune des parties formant crochet (114) étant pliée dans une direction croisant l'arbre rotatif du tambour (110) pour être reçue dans la partie de réception de crochet (121), l'extrémité libre de chaque partie formant crochet étant disposée vers l'avant ou vers l'arrière parallèlement à l'arbre rotatif du tambour (110), et la pluralité de parties formant crochet (114) pliées dans différentes directions étant disposées de manière alternée à intervalles définis sur la surface circonférentielle extérieure du tambour (110).

2. Machine selon la revendication 1, où le tambour (110) est pourvu d'un trou traversant (115) formé dans la surface circonférentielle extérieure à un emplacement espacé de la partie formant crochet (114), de manière à y permettre l'insertion d'une vis, et
où la partie formant crochet (114) et le trou traversant (115) sont disposés de manière alternée à intervalle défini sur la surface circonférentielle extérieure du tambour (110).

3. Machine selon la revendication 1 ou la revendication 2, où la partie formant crochet (114) est formée par découpe de forme rectangulaire de la surface circonférentielle extérieure du tambour (110), et pliée sur un bord.

4. Machine selon l'une des revendications 1 à 3, où la partie formant crochet (114) a une longueur définie permettant la réception dans la partie de réception de crochet (121) et être supportée en étant serrée étroitement contre les dispositifs d'équilibrage (120a, 120b).

5. Machine selon l'une des revendications 2 à 4, où les dispositifs d'équilibrage (120a, 120b) sont pourvus d'une partie de serrage de vis (122) à un emplacement correspondant au trou traversant (115) sur la surface circonférentielle extérieure du tambour (110), de manière à y permettre l'insertion d'une vis.

6. Machine selon l'une des revendications 1 à 5, où la partie de réception de crochet (121) présente un espace intérieur de forme biseautée, permettant l'insertion et le support de la partie formant crochet (114) pliée par application d'une force externe.
